(19) **Europäisches Patentamt**
**European Patent Office**
**Office européen des brevets**

(11) **EP 2 280 250 A2**

(12) **EUROPÄISCHE PATENTANMELDUNG**

(43) Veröffentlichungstag:
02.02.2011 Patentblatt 2011/05

(51) Int Cl.:
**G01F 1/66** (2006.01)

(21) Anmeldenummer: 10006402.1

(22) Anmeldetag: 21.06.2010

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **31.07.2009 CH 12022009**

(71) Anmelder:
• **ILA Intelligent Laser Applications GmbH**
**52428 Jülich (DE)**

• **Optolution GmbH**
**4153 Reinach (CH)**
• **Bundesamt für Metrologie METAS**
**3003 Bern-Wabern (CH)**

(72) Erfinder: **Dues, Michael**
**50126 Bergheim (DE)**

(74) Vertreter: **Castell, Klaus et al**
**Patentanwaltskanzlei**
**Liermann - Castell**
**Gutenbergstrasse 12**
**52349 Düren (DE)**

(54) **Verfahren zur Messung des Volumendurchflusses**

(57) Bei einem Verfahren zur Messung des Volumendurchflusses eines in einer Rohrleitung (1) fliessenden Fluids umfasst die Rohrleitung (1) einen Zugang (10) zur optischen Bestimmung der Fliessgeschwindigkeit des Fluids. Mittel (12) zur Beeinflussung der Strömung des Fluids werden so an bzw. in der Rohrleitung (1) angeordnet, dass sie in das durch die Rohrleitung (1) strömende Fluid hineinragen derart, dass in einem nachfolgenden Abschnitt der Rohrleitung (1) eine Verteilung der Fliessgeschwindigkeit des Fluids vorliegt, die wenigstens in einem Teil (20) des Strömungsquerschnitts im wesentlichen konstant ist. In diesem Teil (20) des Strömungsquerschnitts wird die im Wesentlichen konstante Fliessgeschwindigkeit optisch ermittelt und aus der so ermittelten Fliessgeschwindigkeit der Volumendurchfluss des Fluids durch die Rohrleitung (1) bestimmt.

**Fig. 1**

EP 2 280 250 A2

**Beschreibung**

Die vorliegende Erfindung betrifft ein Verfahren zur Messung des Volumendurchflusses eines in einer Rohrleitung fliessenden Fluids gemäss dem unabhängigen Verfahrensanspruch sowie eine Verwendung des Verfahrens zur Kalibrierung und/oder Kontrolle einer Vorrichtung zur Messung des Volumendurchflusses gemäss dem unabhängigen Verwendungsanspruch.

Verfahren und Messvorrichtungen für die Messung des Volumendurchflusses eines in einer Rohrleitung fliessenden Fluids werden beispielsweise für die Abrechnung von Fernwärmelieferungen eingesetzt. Derartige Messvorrichtungen sind z. B. in der Schweiz und in Deutschland ab einer Leistung von 10 MW derzeit von der Eichpflicht ausgenommen. Daher finden in der Regel keine periodischen Überprüfungen der Messunsicherheiten solcher Messvorrichtungen statt. Weil mit Hilfe solcher Messvorrichtungen enorme Wärmemengen abgerechnet werden, ist eine freiwillige periodische Überprüfung der Messunsicherheit unter anderem im Interesse der Anlagenbetreiber, um einerseits allfällige Verlustkosten zu minimieren und andererseits die Rechtssicherheit bezüglich der abgerechneten Wärmemengen zwischen den Handelspartnern zu erhöhen.

Für die freiwilligen periodischen Überprüfungen der Messunsicherheit solcher Messvorrichtungen wird beispielsweise in der Nähe der Messvorrichtung eine Vergleichsmessvorrichtung in oder an der betreffenden Rohrleitung installiert, die während einigen Stunden bis zu einigen Tagen Vergleichsmessungen vornimmt, um eine Überprüfung bzw. eine Kalibrierung der eigentlichen Messvorrichtung vornehmen zu können. Hierbei wird beispielsweise mit einem Laser-Doppler-Velozimeter - nachstehend mit LDV abgekürzt - und über einen Zugang in der Rohrleitung zur optischen Bestimmung der Fliessgeschwindigkeit des Fluids, dessen Fliessgeschwindigkeit in der Rohrleitung ermittelt. Der Volumendurchfluss kann anschliessend berechnet werden.

Da in der Regel die Fliessgeschwindigkeitsverteilung über den Strömungsquerschnitt des Fluids in der Rohrleitung nicht konstant ist und auch nicht notwendigerweise ausgebildet turbulent oder ausgebildet laminar ist, müssen für die Vergleichsmessungen viele einzelne Messungen der örtlichen Fliessgeschwindigkeit des Fluids an unterschiedlichen Orten des jeweiligen Strömungsquerschnitts vorgenommen werden, um eine hinreichend genaue Vergleichsmessung erzielen zu können. Dies ist aufwändig, weil vergleichsweise grosse Zugänge zur optischen Bestimmung der Fliessgeschwindigkeit vorhanden sein müssen oder geschaffen werden müssen. Auch ist es bei grossen Innendurchmessern der Rohrleitung (DN > 400 mm) aufwändig oder sogar teilweise unmöglich, mit einem LDV die Fliessgeschwindigkeit des Fluids entlang eines Durchmesserpfades des Strömungsquerschnitts zu messen. Desweiteren können in der Rohrleitung vor der Vergleichsmessvorrichtung gekrümmte Rohrstücke und/oder Verzweigungen der Rohrleitung vorhanden sein, welche die Fliessgeschwindigkeitsverteilung noch zusätzlich beeinflussen. Um die ideale Fliessgeschwindigkeitsverteilung einer ausgebildeten turbulenten Strömung zu erhalten, wäre eine gerade Distanz der Rohrleitung von mindestens dem 20- bis 30-fachen des Innendurchmessers der Rohrleitung nach einem gekrümmten Rohrstück bzw. einer Verzweigung erforderlich, bis die durch das gekrümmte Rohrstück bzw. die Verzweigung verursachte Störung der Fliessgeschwindigkeitsverteilung wieder abgeklungen ist. Örtliche Gegebenheiten lassen dies aber vielfach nicht zu.

Der vorliegenden Erfindung liegt daher die Aufgabe zugrunde, ein Verfahren vorzuschlagen, mit welchem eine Messung des Volumendurchflusses eines in einer Rohrleitung fliessenden Fluids durchgeführt werden kann und das insbesondere die obenstehenden Nachteile nicht aufweist.

Diese Aufgabe wird durch das erfindungsgemässe Verfahren gelöst, wie es im unabhängigen Verfahrensanspruch definiert ist. Vorteilhafte Ausführungsvarianten des erfindungsgemässen Verfahrens ergeben sich aus den Merkmalen der abhängigen Patentansprüche.

Bei dem erfindungsgemässen Verfahren zur Messung des Volumendurchflusses eines in einer Rohrleitung fliessenden Fluids umfasst die Rohrleitung einen Zugang zur optischen Bestimmung der Fliessgeschwindigkeit des Fluids. Mittel zur Beeinflussung der Strömung des Fluids werden so an bzw. in der Rohrleitung angeordnet, dass sie in das durch die Rohrleitung strömende Fluid hineinragen derart, dass in einem nachfolgenden Abschnitt der Rohrleitung eine Verteilung der Fliessgeschwindigkeit des Fluids vorliegt, die von den vorhergehenden Strömungsbedingungen unabhängig ist und wenigstens in einem Teil des Strömungsquerschnitts im wesentlichen konstant ist. In diesem Teil des Strömungsquerschnitts wird die im Wesentlichen (z.B. in einem grösseren lokalen Bereich) konstante Fliessgeschwindigkeit optisch ermittelt und aus der so ermittelten Fliessgeschwindigkeit wird der Volumendurchfluss des Fluids durch die Rohrleitung bestimmt.

Somit beschränkt sich die Anzahl vorzunehmender Messungen der Fliessgeschwindigkeit auf einige wenige Messungen (im Extremfall auf nur eine einzige) in dem Teil des Strömungsquerschnitts des Fluids, in dem die Fliessgeschwindigkeit im Wesentlichen konstant ist. Der Aufwand zur Bestimmung des Volumendurchflusses wird reduziert und es müssen auch nicht eine grosse Anzahl von Messungen entlang eines ganzen Durchmesserpfades des Strömungsquerschnitts durchgeführt werden. Das erfindungsgemässe Verfahren kann vorteilhaft für Innendurchmesser der Rohrleitung ab 100 mm und für praktisch alle lichttransparenten Fluide, wie z. B. (Trink-)Wasser, Dampf, Erdgas, raffinierte Flüssigkeiten oder Prozessgase, eingesetzt werden.

Bei einer Variante des erfindungsgemässen Verfahrens wird zur Bestimmung des Volumendurchflusses des Fluids die ermittelte Fliessgeschwindigkeit mit einer durch eine Referenzmessung ermittelten Konstanten multipliziert, die charakteristisch für die jeweiligen Mittel zur Beeinflussung der Strömung des Fluids, für vordefinierte Fluidbedingungen (z.B. kinematische Viskosität des Fluids, Stömungsgeschwindigkeit, Rohrleitungsdurchmesser, Rauigkeit der Rohrinnenwand, etc., oder Kombinationen aus diesen Bedingungen), und für den jeweiligen Innendurchmesser der Rohrleitung ist.

Mit einer Referenzmessung, z. B. auf einem Prüfstand, kann vor der Durchführung der eigentlichen Messungen an der Rohrleitung die Konstante ermittelt werden, so dass dann unmittelbar anschliessend an die Bestimmung der Fliessgeschwindigkeit der Volumendurchfluss berechnet werden kann. Die Fliessgeschwindigkeit wird, wie bereits oben erwähnt, in demjenigen Teil des Strömungsquerschnitts ermittelt, in dem die Fliessgeschwindigkeit des Fluids im Wesentlichen konstant ist. Die Referenzmessung könnte aber grundsätzlich auch erst nach der Vergleichsmessung durchgeführt werden. In diesem Fall kann der Volumendurchfluss durch die Rohrleitung dann aber nicht unmittelbar anschliessend an die Bestimmung der Fliessgeschwindigkeit erfolgen, sondern erst nach erfolgter Referenzmessung. Das erfindungsgemässe Verfahren ist im Wesentlichen unabhängig von Strömungsparametern wie Volumenstrom, Temperatur und Druck, d. h. es ist im wesentlichen unabhängig von der Reynoldszahl des zu messenden Fluids.

Bei einer weiteren Ausführungsvariante des erfindungsgemässen Verfahrens wird als Mittel zur Beeinflussung der Strömung des Fluids mindestens ein Strömungsmanipulator an bzw. in der Rohrleitung angeordnet.

Strömungsmanipulatoren sind Elemente zur gezielten Beeinflussung der Strömung des Fluids. Als Strömungsmanipulatoren können Stifte oder Leitbleche, z. B. aus Metall, eingesetzt werden. Geeignete Strömungsmanipulatoren und deren Anordnungen können eine Störung und Durchmischung der Verteilung der Fliessgeschwindigkeit bewirken, welche in einer gewünschten Verteilung der Fliessgeschwindigkeit resultiert, die - in Bezug auf die Strömungsrichtung - hinter den Strömungsmanipulatoren unabhängig von allfälligen Störungen vor den Strömungsmanipulatoren ist.

Bei einer weiteren Ausführungsvariante des erfindungsgemässen Verfahrens wird zur optischen Ermittlung der Fliessgeschwindigkeit ein Laser-Doppler-Velozimeter verwendet.

Mit dem Laser-Doppler-Velozimeter (Laser-Doppler-Velocimeter, LDV) wird mit kohärentem Licht eines Lasers ein Interferenzmuster an Partikeln des Fluids erzeugt, wobei der Abstand der einzelnen Interferenzlinien des Interferenzmusters die Gerätekonstante bzw. die Proportionalitätskonstante zwischen der gemessenen Verschiebung der Doppler-Frequenz und der Fliessgeschwindigkeit von in der Strömung mitgeführten kleinsten Inhomogenitäten darstellt. Das von diesen Inhomogenitäten rückgestreute Licht des Interferenzmusters wird im LDV ausgekoppelt, registriert und ausgewertet. Dies ist ein einfaches und zuverlässiges Verfahren, um optisch die lokale Fliessgeschwindigkeit des Fluids in der Rohrleitung zu ermitteln. Alternativ kann auch das bekannte Verfahren der Particle Image Velocimetry (PIV) zur optischen Ermittlung der Fliessgeschwindigkeit eingesetzt werden.

Bei einer weiteren Ausführungsvariante des erfindungsgemässen Verfahrens wird der Strömungsmanipulator in Strömungsrichtung betrachtet in einem Abstand vor dem Zugang zur optischen Bestimmung der Fliessgeschwindigkeit des Fluids angeordnet, und zwar senkrecht zur Längsachse der Rohrleitung und höchstens bis in die Mitte der Rohrleitung hineinragend. Der Abstand des Strömungsmanipulators von dem Zugang zur optischen Bestimmung der Fliessgeschwindigkeit liegt im Bereich des - bis 10-fachen des Innendurchmessers der Rohrleitung, bevorzugt in einem Bereich des 2- bis 5-fachen des Innendurchmessers der Rohrleitung, und insbesondere in einem Abstand von etwa dem 3-fachen des Innendurchmessers der Rohrleitung.

Eine solche Anordnung des Strömungsmanipulators erzeugt in Strömungsrichtung gesehen hinter dem Strömungsmanipulator die gewünschte Verteilung der Fliessgeschwindigkeit, die dann am Ort ihrer optischen Bestimmung in demjenigen Teil des Strömungsquerschnitts, in dem sie bestimmt wird, in einem grösseren lokalen Bereich im wesentlichen konstant ist und unabhängig von den sogenannten Vorstörungen der Fliessgeschwindigkeit ist. Somit sind nur wenige Messungen der Fliessgeschwindigkeit (im Extremfall nur eine einzige) in diesem Teil des Strömungsquerschnitts notwendig, um daraus dann den Volumendurchfluss zu bestimmen. Insbesondere muss nicht die Geschwindigkeit über einen ganzen Durchmesserpfad des Strömungsquerschnitts ermittelt werden, was speziell für optisch dichte Fluide und grosse Rohrleitungsdimensionen (ab ca. DN 300) vorteilhaft ist.

Bei einer weiteren Ausführungsvariante des erfindungsgemässen Verfahrens wird ein weiterer Strömungsmanipulator in einem Abstand vor dem Zugang zur optischen Bestimmung der Fliessgeschwindigkeit des Fluids angeordnet, und zwar in Strömungsrichtung betrachtet vor dem bereits genannten Strömungsmanipulator und ebenfalls senkrecht zur Längsachse der Rohrleitung und höchstens bis in die Mitte der Rohrleitung hineinragend. Der weitere Strömungsmanipulator wird im gleichen Azimutwinkel - bezogen auf den Strömungsquerschnitt bzw. auf den Querschnitt der Rohrleitung - wie der bereits genannte Strömungsmanipulator angeordnet, und zwar in einem Abstand vom Zugang zur optischen Bestimmung der Fliessgeschwindigkeit, der im Bereich des 1- bis 10-fachen des Innendurchmessers der Rohrleitung liegt, bevorzugt in einem Bereich des 2- bis 5-fachen des Innendurchmessers der Rohrleitung, und insbesondere in einem Abstand von etwa dem 4-fachen des Innendurchmessers der Rohrleitung.

Der weitere Strömungsmanipulator bewirkt eine Verteilung der Fliessgeschwindigkeit, die noch gleichmässiger ist und die Genauigkeit der Messung des Volumendurchflusses noch erhöhen kann.

Wiederum bei einer anderen Ausführungsvariante des erfindungsgemässen Verfahrens wird der weitere Strömungsmanipulator in einem Abstand vor dem Zugang zur optischen Bestimmung der Fliessgeschwindigkeit des Fluids angeordnet, und zwar im gleichen Abstand von dem Zugang zur optischen Bestimmung der Fliessgeschwindigkeit des Fluids wie der bereits genannte Strömungsmanipulator und ebenfalls senkrecht zur Längsachse der Rohrleitung und höchstens bis in die Mitte der Rohrleitung hineinragend. Der weitere Strömungsmanipulator und der bereits genannte Strömungsmanipulator schliessen bei dieser Variante jedoch einen Azimutwinkel von ±90° oder von ±180° ein.

Der weitere Strömungsmanipulator bewirkt auch bei dieser Variante eine Verteilung der Fliessgeschwindigkeit, die noch gleichmässiger ist und die Genauigkeit der Messung des Volumendurchflusses noch erhöhen kann. Durch die Anordnung der Strömungsmanipulatoren unter einem Azimutwinkel von ±90° relativ zueinander wird der Teil des Strömungsquerschnitts des Fluids, in dem die Fliessgeschwindigkeit im wesentlichen konstant ist, um einen Azimutwinkel von etwa ±45° gedreht (er liegt also etwa bei der Hälfte des eingeschlossenen Azimutwinkels). Dies kann je nach Örtlichkeiten und je nach der Möglichkeit der Platzierung des Zugangs zur optischen Bestimmung der Fliessgeschwindigkeit vorteilhaft sein.

Bei einer weiteren Ausführungsvariante des erfindungsgemässen Verfahrens wird der weitere Strömungsmanipulator in einem Abstand vor dem Zugang zur optischen Bestimmung der Fliessgeschwindigkeit des Fluids angeordnet, und zwar in Strömungsrichtung betrachtet vor dem bereits genannten Strömungsmanipulator und ebenfalls senkrecht zur Längsachse der Rohrleitung und höchstens bis in die Mitte der Rohrleitung hineinragend. Der weitere Strömungsmanipulator wird in einem Azimutwinkel von ±90° oder von ±180° relativ zu dem bereits genannten Strömungsmanipulator angeordnet, und zwar in einem Abstand vom Zugang zur optischen Bestimmung der Fliessgeschwindigkeit, der im Bereich des 1- bis 10-fachen des Innendurchmessers der Rohrleitung liegt, bevorzugt in einem Bereich des 2- bis 5-fachen des Innendurchmessers der Rohrleitung, und insbesondere in einem Abstand von etwa dem 4-fachen des Innendurchmessers der Rohrleitung.

Der weitere Strömungsmanipulator bewirkt eine Verteilung der Fliessgeschwindigkeit, die im Wesentlichen noch gleichmässiger ist und die Genauigkeit der Messung des Volumendurchflusses noch erhöhen kann. Durch die Anordnung der Strömungsmanipulatoren unter einem Azimutwinkel von ±90° relativ zueinander wird der Teil des Strömungsquerschnitts des Fluids, in dem die Fliessgeschwindigkeit im wesentlichen konstant ist, um einen Azimutwinkel von etwa ±45° gedreht (er liegt also etwa bei der Hälfte des eingeschlossenen Azimutwinkels). Dies kann je nach Örtlichkeiten und je nach der Möglichkeit der Platzierung des Zugangs zur optischen Bestimmung der Fliessgeschwindigkeit vorteilhaft sein. Denkbar sind auch Anordnungen der Strömungsmanipulatoren mit mehr als zwei Strömungsmanipulatoren.

Bei einer weiteren Ausführungsvariante des erfindungsgemässen Verfahrens wird als Strömungsmanipulator jeweils ein trapezförmiges Leitblech verwendet, das so in Strömungsrichtung angeordnet wird, dass es einen Winkel von etwa 45° sowohl in Bezug auf die Strömungsrichtung als auch in Bezug auf den Strömungsquerschnitt aufweist.

Trapezförmige Leitbleche, die in einem Winkel von etwa 45° Winkel in Bezug auf die Strömungsrichtung angeordnet sind, bewirken einerseits die gewünschte Beeinflussung der Strömung des Fluids und andererseits nicht allzuviel Fliesswiderstand, um den ordnungsgemässen Betrieb der Anlage gewährleisten zu können. Es können aber auch andere Strömungsmanipulatoren, wie z. B. ein Stab mit angeflanschten Leitblechen oder Blenden, eingesetzt werden.

Bei einer speziellen Ausführungsvariante des erfindungsgemässen Verfahrens wird der Zugang zur optischen Bestimmung der Fliessgeschwindigkeit des Fluids (vor Ort) in die Rohrleitung gebohrt, ohne das Fliessen des Fluids durch die Rohrleitung zu unterbrechen.

So kann beispielsweise in einer Rohrleitung eines Wärmeverbundes sichergestellt werden, dass zur Erstellung des Zugangs zur optischen Bestimmung der Fliessgeschwindigkeit des Fluids die Versorgung nicht unterbrochen werden muss. Eine derartige Anbohrmethode erlaubt gleichzeitig das Einsetzen eines Fensters, welches an der Rohrleitung verbleiben und für spätere Vergleichsmessung herangezogen werden kann.

Schliesslich werden bei einer anderen Ausführungsvariante des erfindungsgemässen Verfahrens weitere Zugänge für die jeweiligen Strömungsmanipulatoren in die Rohrleitung gebohrt, ohne das Fliessen des Fluids durch die Rohrleitung zu unterbrechen.

Je nach Verwendung der Rohrleitung kann der Betrieb nicht einfach unterbrochen werden, um die Strömungsmanipulatoren anzubringen. Es wird analog zum Anbringen des Zugangs zur optischen Bestimmung der Fliessgeschwindigkeit des Fluids mit einer Anbohrmethode gearbeitet, die dies erlaubt, wobei für die Strömungsmanipulatoren kein Fenster eingesetzt wird. Stattdessen werden über eine Schleusenkammer die Strömungsmanipulatoren angebracht.

Ein weiterer Aspekt der Erfindung betrifft die Verwendung des erfindungsgemässen und vorstehend beschriebenen Verfahrens zur Kalibrierung und/oder zur Kontrolle einer bereits an bzw. in einer Rohrleitung angeordneten Vorrichtung zur Messung des Volumendurchflusses eines durch die Rohrleitung strömenden Fluids.

Das erfindungsgemässe Verfahren ermöglicht mit wenigen Messungen (im Extremfall nur eine) der Fliessgeschwindigkeit des Fluids in demjenigen Teil des Strömungsquerschnitts, in dem die Fliessgeschwindigkeit des Fluids im wesentlichen konstant ist, den Volumendurchfluss zu ermitteln und dadurch eine periodische Überprüfung bzw. eine Kalibrierung einer bereits an oder in einer Rohrleitung angeordneten Vorrichtung zur Messung des Volumendurchflusses unterbruchsfrei, mit einer hohen Genauigkeit und ohne grossen Aufwand bei den realen Einbaubedingungen des Prüflings zu ermöglichen.

Im Folgenden wird die Erfindung unter Bezugnahme auf die beigefügten Zeichnungen anhand von Ausführungsbeispielen detaillierter beschrieben. Es zeigen:

Fig. 1 -   ein Ausführungsbeispiel einer Anordnung für das er- findungsgemässe Verfahren;

Fig. 2 -   ein Diagramm der Fliessgeschwindigkeitsverteilung über den Strömungsquerschnitt eines Fluids in einer Rohrleitung der Anordnung gemäss Fig. 1;

Fig. 3 -   ein Laser-Doppler-Velozimeter für den Einsatz in der Anordnung gemäss Fig. 1;

Fig. 4 -   ein erstes Ausführungsbeispiel einer Anordnung eines Strömungsmanipulators in der Rohrleitung für das er- findungsgemässe Verfahren;

Fig. 5 -   ein zweites Ausführungsbeispiel einer Anordnung zweier Strömungsmanipulatoren in der Rohrleitung für das erfindungsgemässe Verfahren;

Fig. 6 -   ein drittes Ausführungsbeispiel einer Anordnung zweier Strömungsmanipulatoren in der Rohrleitung für das erfindungsgemässe Verfahren;

Fig. 7 -   ein viertes Ausführungsbeispiel einer Anordnung zweier Strömungsmanipulatoren in der Rohrleitung für das erfindungsgemässe Verfahren;

Fig. 8 -   ein fünftes Ausführungsbeispiel einer Anordnung zweier Strömungsmanipulatoren in der Rohrleitung für das erfindungsgemässe Verfahren; und

Fig. 9    - ein sechstes Ausführungsbeispiel einer Anordnung zweier Strömungsmanipulatoren in der Rohrleitung für das erfindungsgemässe Verfahren.

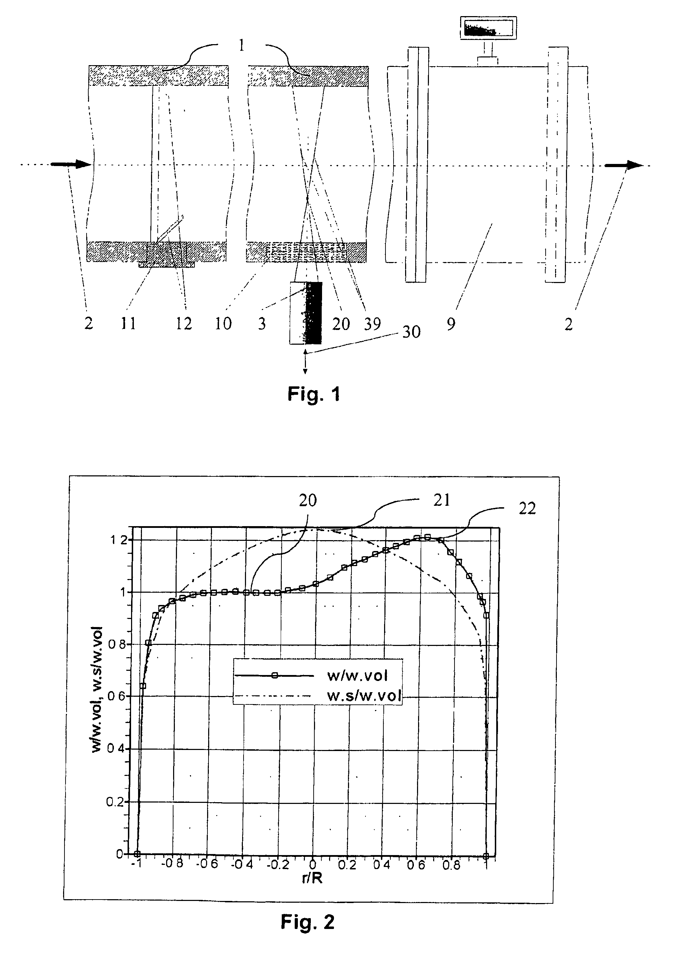

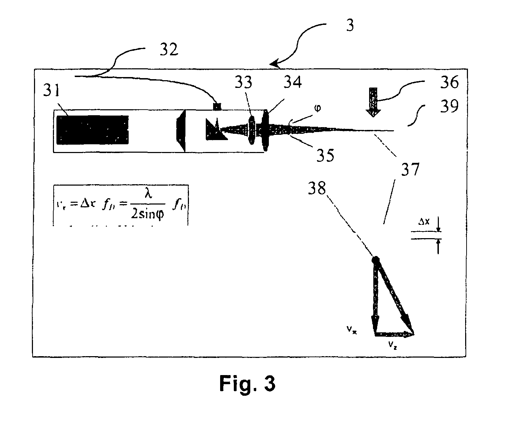

Fig. 1 zeigt ein erstes Ausführungsbeispiel einer Anordnung für das erfindungsgemässe Verfahren zur Messung des Volumendurchflusses eines in einer Rohrleitung 1 fliessenden Fluids. Die Fliessrichtung des Fluids ist mit einem Pfeil 2 angegeben. Die Rohrleitung 1 umfasst einen Zugang 10 zur optischen Bestimmung der Fliessgeschwindigkeit des Fluids und einen weiteren Zugang 11. Über den weiteren Zugang 11 werden Mittel zur Beeinflussung der Strömung des Fluids, wie z. B. Strömungsmanipulatoren 12 so an bzw. in der Rohrleitung 1 angeordnet, dass sie in das durch die Rohrleitung 1 strömende Fluid hineinragen. In einem nachfolgenden Abschnitt der Rohrleitung 1 liegt eine Verteilung der Fliessgeschwindigkeit des Fluids vor, die von eventuellen Vorstörungen im Wesentlichen unabhängig ist und wenigstens in einem Teil 20 des Strömungsquerschnitts im Wesentlichen konstant ist. In diesem Teil 20 des Strömungsquerschnitts wird die im Wesentlichen konstante Fliessgeschwindigkeit optisch, z. B. mit einem Laser-Doppler-Velozimeter (Laser-Doppler-Velocimeter, LDV) 3 ermittelt. Das LDV 3 kann in Richtung der Pfeile 30 senkrecht zur Rohrleitung 1 bzw. senkrecht zur Fliessrichtung 2 des Fluids verschoben werden, um verschiedene Messpunkte für die Fliessgeschwindigkeit anzuwählen. Aus den so ermittelten lokalen Fliessgeschwindigkeiten wird der Volumendurchfluss des Fluids durch die Rohrleitung 1 bestimmt. Der ermittelte Volumendurchfluss kann zur Kalibrierung und/oder zur Kontrolle einer bereits an bzw. in einer Rohrleitung 1 angeordneten Vorrichtung 9 zur Messung des Volumendurchflusses oder Volumens eines durch die Rohrleitung 1 strömenden Fluids verwendet werden. Das LDV 3 umfasst einen Laser (siehe Fig. 3), der kohärentes Licht 39 generiert.

Für die gesamte weitere Beschreibung gilt folgende Festlegung. Sind in einer Figur zum Zweck zeichnerischer Eindeutigkeit Bezugzeichen enthalten, aber im unmittelbar zugehörigen Beschreibungstext nicht erläutert, so wird auf deren Erwähnung in vorangehenden Figurenbeschreibungen Bezug genommen.

Fig. 2 zeigt ein Diagramm der Fliessgeschwindigkeitsverteilung über den Strömungsquerschnitt eines Fluids. Hierbei sind jeweils normalisierte Werte für die x- und y-Achse eingetragen. Eine erste Kurve 21 zeigt eine Fliessgeschwindigkeitsverteilung über den Strömungsquerschnitt einer ausgebildeten turbulenten ungestörten Strömung. Eine zweite Kurve 22 zeigt eine Fliessgeschwindigkeitsverteilung über den Strömungsquerschnitt einer mit Strömungsmanipulatoren 12 gezielt gestörten Strömung. Die zweite Kurve 22 umfasst ein Plateau als Teil 20 des Strömungsquerschnitts, in dem die Verteilung der Fliessgeschwindigkeit des Fluids im Wesentlichen konstant ist. In diesem Teil 20 des Strömungsquerschnitts kann die im Wesentlichen konstante Fliessgeschwindigkeit optisch ermittelt werden. Anschliessend wird zur Bestimmung des Volumendurchflusses des Fluids die ermittelte Fliessgeschwindigkeit mit einer durch eine Referenzmessung ermittelten Konstante multipliziert, die charakteristisch für die jeweiligen Mittel zur Beeinflussung der Strömung des Fluids, für vordefinierte Fluidbedingungen, und für den jeweiligen Innendurchmesser der Rohrleitung ist. Anstatt den Volumendurchfluss (Q) in herkömmlicher Art und Weise mit einem Integral der Fliessgeschwindigkeit (v(x,y)) über die Fläche (A) des gesamten Strömungsquerschnitts zu berechnen:

$$Q = \int v(x, y) dA \ ,$$

wird beim erfindungsgemässen Verfahren die anlässlich einer Referenzmessung ermittelte Konstante, die dem Kehrwert des Plateaus (v/v.vol(P)) entspricht, mit der optisch ermittelten Fliessgeschwindigkeit (v(P)) und der Fläche (A) des Strömungsquerschnitts multipliziert und so der Volumendurchfluss (Q) bestimmt:

$$Q = \frac{v(P) * A}{v / v.vol(P)} \ .$$

Fig. 3 zeigt ein Laser-Doppler-Velozimeter für den Einsatz im erfindungsgemässen Verfahren. Ein Laser 31 generiert kohärentes Licht 39, das mit einer Sendeoptik 34 unter einem halben Schnittwinkel φ fokussiert wird. Eine Interaktion mit Partikel 38 eines in Pfeilrichtung 36 fliessenden Fluids erzeugt ein Interferenzmuster 37, aus dem die Fliessgeschwindigkeit der Partikel 38 ermittelt werden kann. Hierzu wird über eine Empfangsoptik 33 rückgestreutes Licht 35 mit einer Empfangsfaser 32 einer Auswerteeinheit zugeführt. Die Fliessgeschwindigkeit kann anschliessend anhand der in Fig. 3 gezeigten Formel berechnet werden, wobei der Interferenzstreifenabstand Δx, die Wellenlänge des kohärenten Lichts vom Laser λ, die Doppler-Frequenz $f_D$ und der halbe Schnittwinkel φ zur Berechnung herangezogen werden.

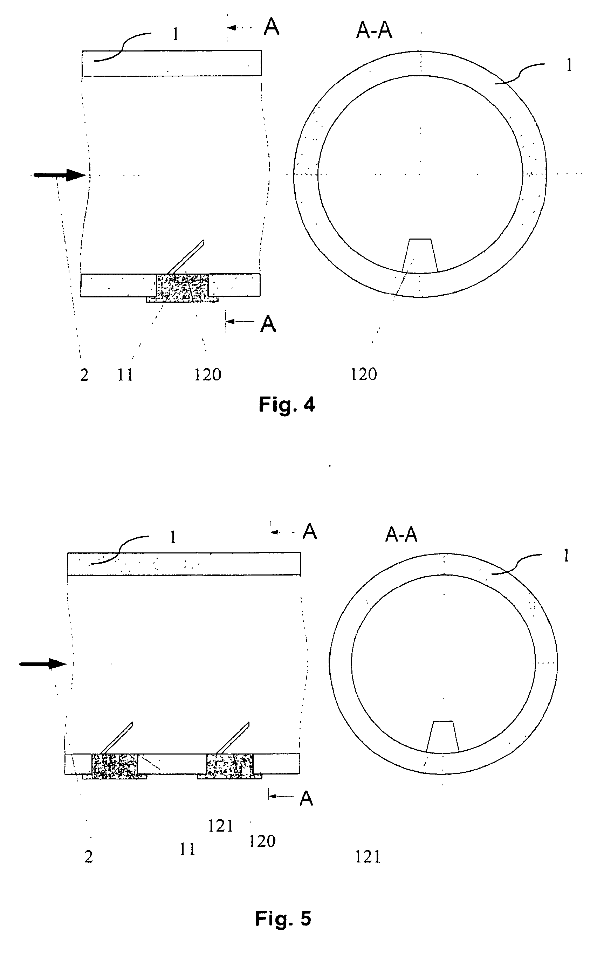

Fig. 4 zeigt ein erstes Ausführungsbeispiel einer Anordnung eines Strömungsmanipulators zur Beeinflussung der Verteilung der Fliessgeschwindigkeit in der Rohrleitung 1. Der Strömungsmanipulator umfasst ein trapezförmiges Leitblech 120, das so in Strömungsrichtung 2 angeordnet wird, dass es einen Winkel von etwa 45° sowohl in Bezug auf die Strömungsrichtung 2 als auch in Bezug auf den Strömungsquerschnitt aufweist. Das trapezförmige Leitblech 120 wird in Strömungsrichtung betrachtet in einem Abstand vor dem Zugang 10 zur optischen Bestimmung der Fliessgeschwindigkeit des Fluids angeordnet, und zwar senkrecht zur Längsachse der Rohrleitung und höchstens bis in die Mitte der Rohrleitung hineinragend. Der Abstand des trapezförmige Leitblech 120 von dem Zugang 10 zur optischen Bestimmung der Fliessgeschwindigkeit liegt im Bereich des 1- bis 10-fachen des Innendurchmessers der Rohrleitung 1, bevorzugt in einem Bereich des 2- bis 5-fachen des Innendurchmessers der Rohrleitung 1, und insbesondere in einem Abstand von etwa dem 3-fachen des Innendurchmessers der Rohrleitung 1.

Fig. 5 zeigt ein zweites Ausführungsbeispiel einer Anordnung von Strömungsmanipulatoren in der Rohrleitung 1. Der Strömungsmanipulator umfasst das bereits genannte trapezförmige Leitblech 120, das wie obenstehend bei der Fig. 4 beschrieben in einem Abstand vor dem Zugang 10 zur optischen Bestimmung der Fliessgeschwindigkeit des Fluids angeordnet wird. Ein weiterer Strömungsmanipulator umfasst ein weiteres trapezförmiges Leitblech 121, das in einem Abstand vor dem Zugang 10 zur optischen Bestimmung der Fliessgeschwindigkeit des Fluids angeordnet wird, und zwar in Strömungsrichtung 2 betrachtet vor dem bereits genannten trapezförmigen Leitblech 120 und ebenfalls senkrecht zur Längsachse der Rohrleitung 1 und höchstens bis in die Mitte der Rohrleitung 1 hineinragend. Das weitere trapezförmige Leitblech 121 wird im gleichen Azimutwinkel wie das bereits genannte trapezförmige Leitblech 120 angeordnet, und zwar in einem Abstand vom Zugang zur optischen Bestimmung der Fliessgeschwindigkeit, der im Bereich des 1- bis 10-fachen des Innendurchmessers der Rohrleitung 1 liegt, bevorzugt in einem Bereich des 2- bis 5-fachen des Innendurchmessers der Rohrleitung 1, und insbesondere in einem Abstand von etwa dem 4-fachen des Innendurchmessers der Rohrleitung 1. Das weitere trapezförmige Leitblech 121 wird so in Strömungsrichtung 2 angeordnet, dass es einen Winkel von etwa 45° sowohl in Bezug auf die Strömungsrichtung 2 als auch in Bezug auf den Strömungsquerschnitt aufweist.

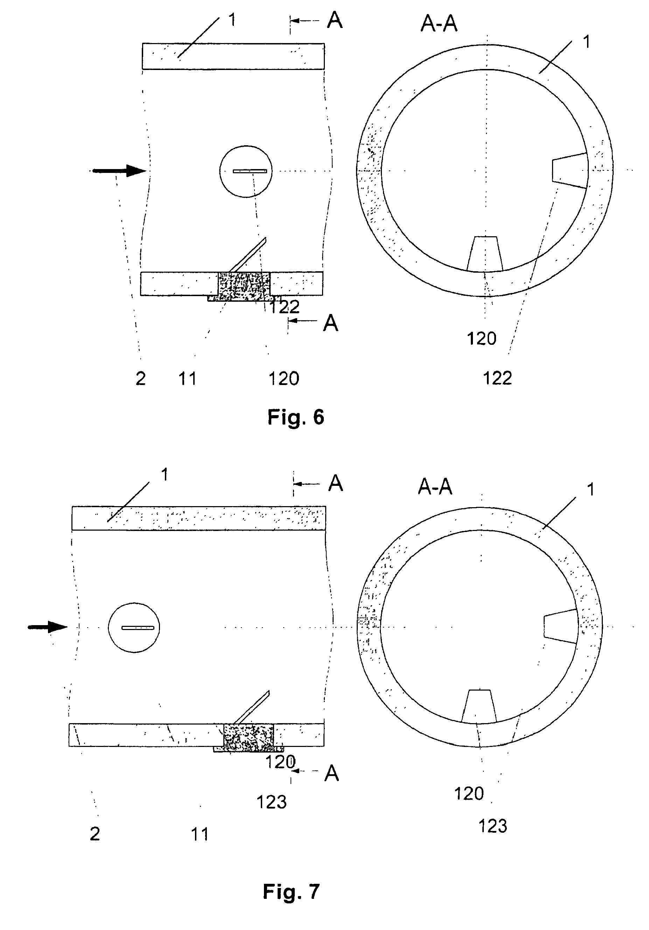

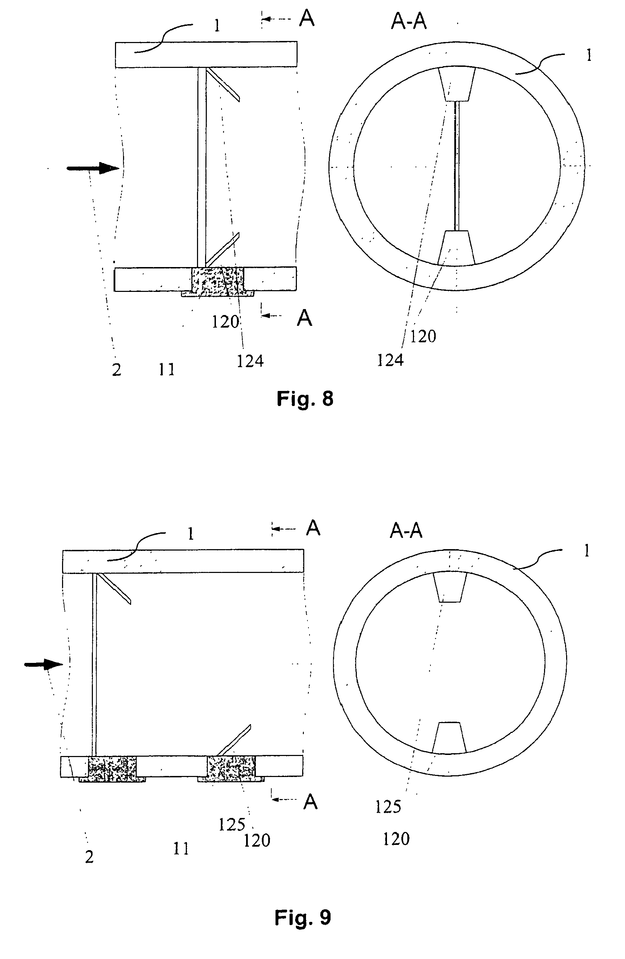

Fig. 6 und 8 zeigen ein drittes bzw. fünftes Ausführungsbeispiel einer Anordnung von Strömungsmanipulatoren in der Rohrleitung 1. Der Strömungsmanipulator umfasst wiederum das genannte trapezförmige Leitblech 120, das wie obenstehend bei der Fig. 4 beschrieben in einem Abstand vor dem Zugang 10 zur optischen Bestimmung der Fliessgeschwindigkeit des Fluids angeordnet wird. Ein weiterer Strömungsmanipulator umfasst ein weiteres trapezförmiges Leitblech 122 bzw. 124, das im gleichen Abstand von dem Zugang 10 zur optischen Bestimmung der Fliessgeschwindigkeit des Fluids wie das bereits genannte trapezförmige Leitblech 120 und ebenfalls senkrecht zur Längsachse der Rohrleitung 1 und höchstens bis in die Mitte der Rohrleitung 1 hineinragend angeordnet wird. Das weitere trapezförmige Leitblech 122 und das bereits genannte trapezförmige Leitblech 120 schliessen einen Azimutwinkel von ±90° (Fig. 6) bzw. von ±180° (Fig. 8) ein. Das weitere trapezförmige Leitblech 122 bzw. 124 wird so in Strömungsrichtung 2 angeordnet, dass es einen Winkel von etwa 45° sowohl in Bezug auf die Strömungsrichtung 2 als auch in Bezug auf den Strömungsquerschnitt aufweist. Das in Fig. 8 gezeigte trapezförmige Leitblech 120 und das weitere trapezförmige Leitblech 124 können in einem Stab zusammengefasst werden und ergeben zusammen einen Manipulator, der sowohl die Verteilung der Fliessgeschwindigkeit (Primärströmung) als auch den Drall (Sekundärströmung) in der Rohrleitung beeinflusst.. Ein einziger weiterer Zugang 11 reicht aus, um diesen kombinierten Manipulator an bzw. in der Rohrleitung 1 anzuordnen.

Fig. 7, 9 zeigen ein viertes bzw. sechstes Ausführungsbeispiel einer Anordnung von Strömungsmanipulatoren in der Rohrleitung 1. Der Strömungsmanipulator umfasst wiederum das genannte trapezförmige Leitblech 120, das wie obenstehend bei der Fig. 4 beschrieben in einem Abstand vor dem Zugang 10 zur optischen Bestimmung der Fliessgeschwindigkeit des Fluids angeordnet wird. Ein weiterer Strömungsmanipulator umfasst ein weiteres trapezförmiges Leitblech 123 bzw. 125, das in einem Abstand vor dem Zugang 10 zur optischen Bestimmung der Fliessgeschwindigkeit des Fluids angeordnet wird, und zwar in Strömungsrichtung betrachtet vor dem bereits genannten trapezförmigen Leitblech 120 und ebenfalls senkrecht zur Längsachse der Rohrleitung und höchstens bis in die Mitte der Rohrleitung 1 hineinragend, und bei welchem das weitere trapezförmige Leitblech 123 bzw. 125 in einem Azimutwinkel von $\pm 90°$ (Fig. 7) bzw. von $\pm 180°$ (Fig. 9) relativ zu dem bereits genannten trapezförmigen Leitblech 120 angeordnet wird, und zwar in einem Abstand vom Zugang 10 zur optischen Bestimmung der Fliessgeschwindigkeit, der im Bereich des 1- bis 10-fachen des Innendurchmessers der Rohrleitung 1 liegt, bevorzugt in einem Bereich des 2- bis 5-fachen des Innendurchmessers der Rohrleitung 1, und insbesondere in einem Abstand von etwa dem 4-fachen des Innendurchmessers der Rohrleitung 1. Das weitere trapezförmige Leitblech 123 bzw. 125 wird so in Strömungsrichtung 2 angeordnet, dass es einen Winkel von etwa 45° sowohl in Bezug auf die Strömungsrichtung 2 als auch in Bezug auf den Strömungsquerschnitt aufweist.

Zu den vorbeschriebenen Ausführungsbeispielen sind weitere konstruktive Variationen realisierbar. Insbesondere ist auch der Einsatz von anderen Strömungsmanipulatoren möglich.

**Patentansprüche**

1. Verfahren zur Messung des Volumendurchflusses eines in einer Rohrleitung (1) fliessenden Fluids, bei dem die Rohrleitung (1) einen Zugang (10) zur optischen Bestimmung der Fliessgeschwindigkeit des Fluids umfasst, und bei dem Mittel (12, 120, 121; 122; 123; 124; 125) zur Beeinflussung der Strömung des Fluids so an bzw. in der Rohrleitung (1) angeordnet werden, dass sie in das durch die Rohrleitung (1) strömende Fluid hineinragen derart, dass in einem nachfolgenden Abschnitt der Rohrleitung (1) eine Verteilung der Fliessgeschwindigkeit des Fluids vorliegt, die wenigstens in einem Teil (20) des Strömungsquerschnitts im wesentlichen konstant ist, dass in diesem Teil (20) des Strömungsquerschnitts die im wesentlichen konstante Fliessgeschwindigkeit optisch ermittelt wird, und dass aus der so ermittelten Fliessgeschwindigkeit der Volumendurchfluss des Fluids durch die Rohrleitung (1) bestimmt wird.

2. Verfahren nach Anspruch 1, bei welchem zur Bestimmung des Volumendurchflusses des Fluids die ermittelte Fliessgeschwindigkeit mit einer durch eine Referenzmessung ermittelten Konstanten multipliziert wird, die charakteristisch für die jeweiligen Mittel (12, 120, 121; 122; 123; 124; 125) zur Beeinflussung der Strömung des Fluids, für vordefinierte Fluidbedingungen, und für den jeweiligen Innendurchmesser der Rohrleitung (1) ist.

3. Verfahren nach Anspruch 1 oder 2, bei welchem als Mittel zur Beeinflussung der Strömung des Fluids mindestens ein Strömungsmanipulator (12, 120, 121; 122; 123; 124; 125) an bzw. in der Rohrleitung angeordnet wird.

4. Verfahren nach einem der Ansprüche 1 bis 3, bei welchem zur optischen Ermittlung der Fliessgeschwindigkeit ein Laser-Doppler-Velozimeter (3) verwendet wird.

5. Verfahren nach Anspruch 3 oder 4, bei welchem der Strömungsmanipulator (120) in Strömungsrichtung (2) betrachtet in einem Abstand vor dem Zugang (10) zur optischen Bestimmung der Fliessgeschwindigkeit des Fluids angeordnet wird, und zwar senkrecht zur Längsachse der Rohrleitung (1) und höchstens bis in die Mitte der Rohrleitung (1) hineinragend, und bei welchem der Abstand des Strömungsmanipulators (120) von dem Zugang (10) zur optischen Bestimmung der Fliessgeschwindigkeit im Bereich des 1- bis 10-fachen des Innendurchmessers der Rohrleitung (1) liegt, bevorzugt in einem Bereich des 2- bis 5-fachen des Innendurchmessers der Rohrleitung (1), und insbesondere in einem Abstand von etwa dem 3-fachen des Innendurchmessers der Rohrleitung (1).

6. Verfahren nach Anspruch 5, bei welchem ein weiterer Strömungsmanipulator (121) in einem Abstand vor dem Zugang (10) zur optischen Bestimmung der Fliessgeschwindigkeit des Fluids angeordnet wird, und zwar in Strömungsrichtung (2) betrachtet vor dem bereits genannten Strömungsmanipulator (120) und ebenfalls senkrecht zur Längsachse der Rohrleitung (1) und höchstens bis in die Mitte der Rohrleitung (1) hineinragend, und bei welchem der weitere Strömungsmanipulator (121) im gleichen Azimutwinkel wie der bereits genannte Strömungsmanipulator (120) angeordnet wird, und zwar in einem Abstand vom Zugang (10) zur optischen Bestimmung der Fliessgeschwindigkeit, der im Bereich des 1- bis 10-fachen des Innendurchmessers der Rohrleitung (1) liegt, bevorzugt in einem Bereich des 2- bis 5-fachen des Innendurchmessers der Rohrleitung (1), und insbesondere in einem Abstand von etwa dem 4-fachen des Innendurchmessers der Rohrleitung (1).

7. Verfahren nach Anspruch 5, bei welchem ein weiterer Strömungsmanipulator (122; 124) in einem Abstand vor dem Zugang (10) zur optischen Bestimmung der Fliessgeschwindigkeit des Fluids angeordnet wird, und zwar im gleichen Abstand von dem Zugang (10) zur optischen Bestimmung der Fliessgeschwindigkeit des Fluids wie der bereits genannte Strömungsmanipulator (120) und ebenfalls senkrecht zur Längsachse der Rohrleitung (1) und höchstens bis in die Mitte der Rohrleitung (1) hineinragend, und bei welchem der weitere Strömungsmanipulator (122; 124) und der bereits genannte Strömungsmanipulator (120) einen Azimutwinkel von ±90° oder von ±180° einschliessen.

8. Verfahren nach Anspruch 5, bei welchem ein weiterer Strömungsmanipulator (123; 125) in einem Abstand vor dem Zugang (10) zur optischen Bestimmung der Fliessgeschwindigkeit des Fluids angeordnet wird, und zwar in Strömungsrichtung (2) betrachtet vor dem bereits genannten Strömungsmanipulator (120) und ebenfalls senkrecht zur Längsachse der Rohrleitung (1) und höchstens bis in die Mitte der Rohrleitung (1) hineinragend, und bei welchem der weitere Strömungsmanipulator (123; 125) in einem Azimutwinkel von ±90° oder von ±180° relativ zu dem bereits genannten Strömungsmanipulator (120) angeordnet wird, und zwar in einem Abstand vom Zugang (10) zur optischen Bestimmung der Fliessgeschwindigkeit, der im Bereich des 1- bis 10-fachen des Innendurchmessers der Rohrleitung (1) liegt, bevorzugt in einem Bereich des 2- bis 5-fachen des Innendurchmessers der Rohrleitung (1), und insbesondere in einem Abstand von etwa dem 4-fachen des Innendurchmessers der Rohrleitung (1).

9. Verfahren nach einem der Ansprüche 3 bis 8, wobei als Strömungsmanipulator jeweils ein trapezförmiges Leitblech (120, 121; 122; 123; 124; 125) verwendet wird, das so in Strömungsrichtung (2) angeordnet wird, dass es einen Winkel von etwa 45° sowohl in Bezug auf die Strömungsrichtung (2) als auch in Bezug auf den Strömungsquerschnitt aufweist.

10. Verfahren nach einem der Ansprüche 1 bis 9, wobei der Zugang (10) zur optischen Bestimmung der Fliessgeschwindigkeit des Fluids in die Rohrleitung (1) gebohrt wird, ohne das Fliessen des Fluids durch die Rohrleitung (1) zu unterbrechen.

11. Verfahren nach einem der Ansprüche 3 bis 10, wobei weitere Zugänge (11) für die jeweiligen Strömungsmanipulatoren (12, 120, 121; 122; 123; 124; 125) in die Rohrleitung (1) gebohrt werden, ohne das Fliessen des Fluids durch die Rohrleitung (1) zu unterbrechen.

12. Verwendung eines Verfahrens nach einem der Ansprüche 1 bis 11 zur Kalibrierung und/oder Kontrolle einer bereits an bzw. in einer Rohrleitung (1) angeordneten Vorrichtung (9) zur Messung des Volumendurchflusses eines durch die Rohrleitung (1) strömenden Fluids.

**Fig. 1**

**Fig. 2**

**Fig. 3**

$$v_{r} = \Delta x \; f_{\scriptscriptstyle D} = \frac{\lambda}{2\sin\varphi} \; f_{\scriptscriptstyle D}$$

A-A

**Fig. 4**

2    11         120              120

A-A

**Fig. 5**

121
120

2        11

121

**Fig. 6**

**Fig. 7**

**Fig. 8**

**Fig. 9**